# EUROPEAN PATENT APPLICATION

(11) **EP 0 932 148 A1**
(43) Date of publication of application: **28.07.1999**
(21) Application number: 99200141.2
(22) Date of filing: 18.01.1999
(51) Int. Cl.: G11B 7/24

(54) **Recordable elements comprising a super-sensitive markable phase-change layer**

(30) Priority: 26.01.1998 US 13650
(71) Applicant: EASTMAN KODAK COMPANY, Rochester, New York 14650 (US)
(72) Inventor: Pan, Kee-Chuan, Rochester, New York 14650-2201 (US); Tyan, Yuan-Sheng, Rochester, New York 14650-2201 (US); Preuss, Donald Robert, Rochester, New York 14650-2201 (US); Farruggia, Giuseppe, Rochester, New York 14650-2201 (US)
(74) Representative: Lewandowsky, Klaus, Dipl.-Ing.

(57) **Abstract**

An optical recordable device including a transparent layer with data marks; a markable phase-change layer formed of specified of Sb, Sn and In which is adapted to change phase and reflectivity in response to heating and being disposed over a portion of the transparent layer; a reflective layer provided over the transparent layer; and a protective layer formed over the reflective layer is disclosed.

## Description

The present invention relates to optical recordable devices.

Compact disks (CD) have enjoyed commercial success. For example, both the CD-recordable and CD-audio disks have enjoyed wide market success. Currently, a new compact disk called a DVD (Digital Versatile Disk) is being introduced. The storage capacity of DVD disk (4.7 GB) is much higher than those of a CD-audio disk (640 MB). As a result, most movies can be stored on a single DVD.

To optimize the rental process of movies using DVD, it is highly desirable to register the usage directly on the disks by marking them while they are being played. Typical DVD disks, however are read-only devices and are not capable of being marked by the users. Furthermore, typical readers do not have a write channel, or a laser powerful enough for writing on conventional recording media.

It is an object of the present invention to make CDs and DVDs capable of being marked with a low power laser so that the low power read laser beam of a conventional disk reader can mark the disks.

The object is achieved by an optical recordable device comprising:
(a) a transparent layer for recorded data marks;
(b) a markable phase-change layer disposed in relationship with the transparent layer and which is adapted to change phase and reflectivity in response to heating and being disposed over a portion of the transparent layer, wherein the markable phase-change layer has compositions within a polygon in a ternary composition diagram of antimony, tin, and indium; wherein the composition diagram is 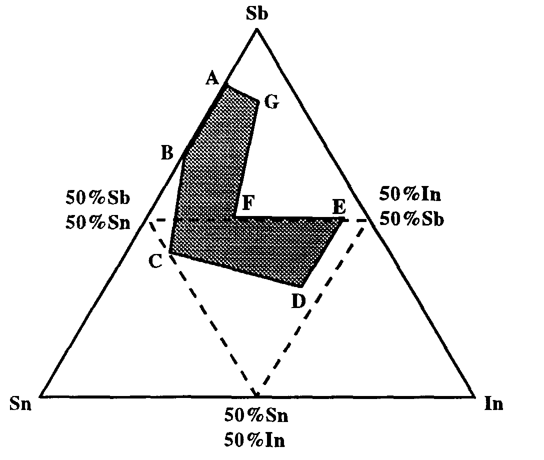 ; and
the polygon has the following vertices and corresponding coordinates in atomic percent:

| | Coordinates | | |
|---|---|---|---|
| Vertices | Sb | Sn | In |
| A | 85 | 15 | 0 |
| B | 65 | 35 | 0 |
| C | 40 | 50 | 10 |
| D | 30 | 25 | 45 |
| E | 50 | 5 | 45 |
| F | 50 | 30 | 20 |
| G | 80 | 10 | 10 |

(c) a reflective layer provided over the transparent layer; and
(d) a protective layer formed over the reflective layer.

Devices made in accordance with the present invention will be able to make marks on the markable phase-change layer.

The present invention provides a super-sensitive material that will undergo a reflectivity change with laser heating. This change is an amorphous to crystalline phase transition. These materials will show a reflectivity change upon laser heating.

The application of the present invention is not limited to DVD. This invention can be used by other optical recording devices that can use super-sensitive materials.
FIG. 1 is a cross sectional view of a portion of a device in accordance with the present invention;
FIG. 2 shows a ternary composition diagram depicting Sb-Sn-In alloys having a constant transition temperature of 100 C;
FIGS. 3 and 4 show plots of reflectivity versus temperature depicting rapid reflectivity changes due to phase transition of Sb₄₉Sn₄₀In₁₁ and Sb₄₄Sn₂₅In₃₁ thin layers, respectively, these layers were heated at constant rate, 0.1 C/sec, in a nitrogen atmosphere;
FIG. 5 shows graphs of relative reflectivity versus read cycles that depicts changes in reflectivity as a function of the number of laser exposure cycles by the read laser.

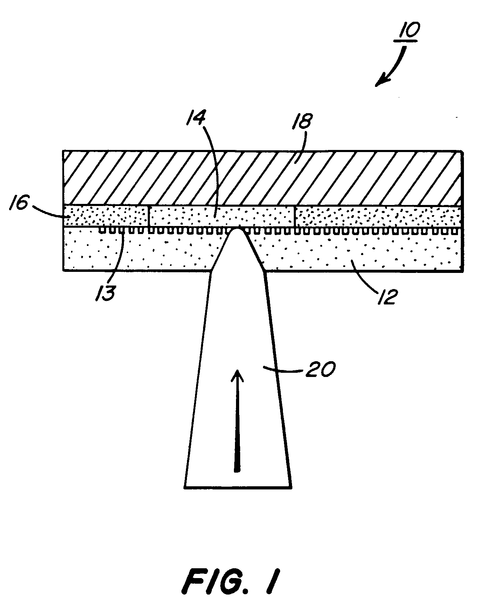

Turning now to FIG. 1, there is shown an optical recordable device 10 that includes a transparent layer 12 with an optional recordable layer which is usable when the optical recording device 10 is a CD-R (CD-recordable) disk. Data marks 13 can either be embossed in the transparent layer 12, or pre-recorded in the recordable layer. Preferably, the transparent layer 12 is made of a material such as polycarbonate and may contain an optional dye recordable layer. A markable phase-change layer 14 is formed on a small portion of the transparent layer 12, on the same side as the data marks 13. This markable phase-change layer 14 can change from an amorphous state to a crystalline state during heating by a laser read beam 20. A reflective layer 16 is formed on the rest of the transparent layer 12. Finally, a protective layer 18 is applied on top of the markable phase-change layer 14 and reflective layer 16. This protective layer 18 can be a polymeric lacquer which can be applied by spin coating and cured by UV exposure.

Ternary composition diagrams are frequently used in analysis of three-component systems. Referring to the sketch below, a three element mixture can be represented as triangular plot with each of the three corners labeled with each of the three elements; in this case Sb, Sn, and In. Any point on or within the triangle will represent a unique composition. The corners represent the pure elements. The edges of the triangle represent the binary mixtures of the two elements at the ends of the edge, and the interior points represent ternary compositions of all three elements. The fraction of an element in the composition represented by a point in the diagram is proportional to the perpendicular distance of that point from the edge opposite the corner denoting that element. For clarity, the tie lines (dotted) between the 50%-50% binary mixtures are shown in the diagram. Each of the tie lines contains 50% of the element in the nearest corner, and a varying mixture of the other two elements. A range of compositions can be specified by describing a region within the composition diagram. One way to do this is to specify the vertices of a polygon within the triangular plot. The present invention provides an optical recording device 10 comprising a markable phase-change layer 14 formed of an alloy having a composition within a polygon in a ternary composition diagram of Sb, Sn, and In, shown below. 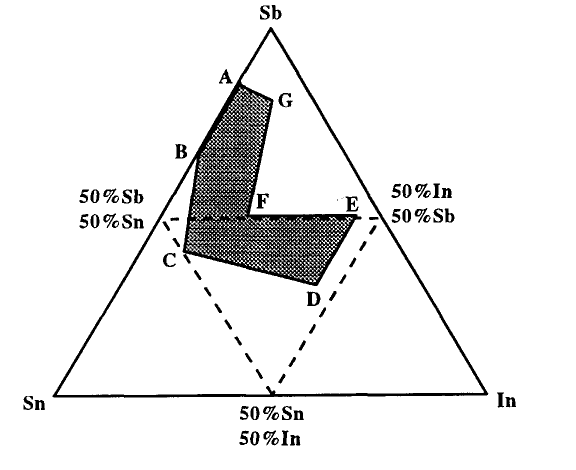 The polygon has the following vertices and corresponding coordinates in atomic percent:

| | Coordinates | | |
|---|---|---|---|
| Vertices | Sb | Sn | In |
| A | 85 | 15 | 0 |
| B | 65 | 35 | 0 |
| C | 40 | 50 | 10 |
| D | 30 | 25 | 45 |
| E | 50 | 5 | 45 |
| F | 50 | 30 | 20 |
| G | 80 | 10 | 10 |

Especially useful markable phase-change layers 18 have alloy compositions within the polygon shown below. 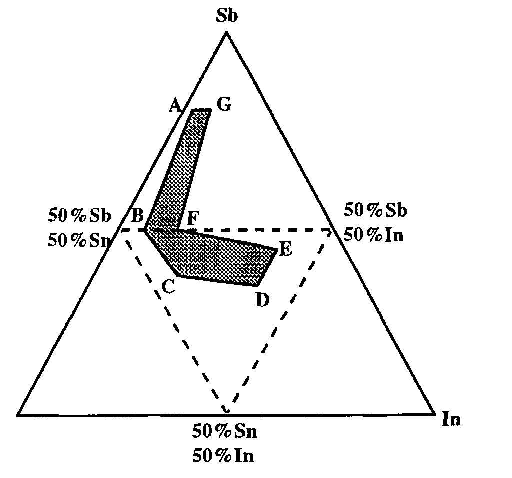 The polygon has the having the following vertices and corresponding coordinates in atomic percent:

| | Coordinates | | |
|---|---|---|---|
| Vertices | Sb | Sn | In |
| A | 80 | 18 | 2 |
| B | 50 | 44 | 6 |
| C | 38 | 42 | 20 |
| D | 36 | 24 | 40 |
| E | 46 | 14 | 40 |
| F | 50 | 36 | 14 |
| G | 80 | 14 | 6 |

The following examples are presented for an understanding of preparing super-sensitive materials.

### Example 1

A co-sputtering process prepared markable phase-change layer 18 of this invention. The markable phase-change layer 18 was sputtered in argon from three targets simultaneously onto a transparent layer 12. The targets were Sb, Sn, and SbIn. The argon flow was 7 sccm having a pressure of 4 mTorr. The power on each target was varied to prepare alloys with various compositions. Table I shows phase transition temperature, reflectivity change for some of the prepared compositions.

**Table I**

| Transition Temperature and Reflectivity Change of Sb-Sn-In Thin Films | | | | |
|---|---|---|---|---|
| TT., C | ΔR% | In at.% | Sb at.% | Sn at.% |
| 92 | 12 | 4.68 | 87.7 | 7.63 |
| 118 | 13 | 4.93 | 79.2 | 15.8 |
| 114 | 21 | 5.22 | 69.5 | 25.3 |
| 120 | 27 | 13.9 | 47 | 39.1 |
| 99 | 12 | 34.2 | 42.3 | 23.5 |
| 165 | 24 | 28 | 49.8 | 22.2 |
| 155 | 24 | 17.7 | 52.3 | 30.1 |
| 86 | 20 | 5.44 | 59.2 | 35.4 |
| 97 | 18 | 4.56 | 90.9 | 4.58 |
| 126 | 15 | 4.71 | 77.5 | 17.8 |
| 104 | 12 | 4.53 | 88.2 | 7.28 |
| 124 | 21 | 4.15 | 70.9 | 24 |
| 113 | 25 | 9.44 | 55.1 | 35.5 |
| 143 | 28 | 14.6 | 46.7 | 38.7 |
| 100 | 14 | 24.7 | 41.1 | 34.3 |
| 121 | 27 | 30.9 | 43.6 | 25.5 |
| 136 | 25 | 32.3 | 45.4 | 22.3 |
| 106 | 14 | 34.5 | 41.9 | 23.6 |
| 148 | 9 | 37.7 | 46.2 | 16.1 |
| 68 | 24 | 0 | 77.2 | 22.8 |
| 103 | 24 | 11 | 49 | 40 |

The markable phase-change layer 14 thickness was about 160 nm. Although, thinner layers can be used in accordance with the invention, the use of thicker layers here was intended for accurate determination of the markable phase-change layer 14 composition. The analyses were done by ICP (Inductively Coupled Plasma-Atomic Emission Spectroscopy).

The amorphous to crystalline phase transition is a heat-induced process. One can adjust the composition of alloys to get a lower transition temperature that leads to a more sensitive markable phase-change layer.

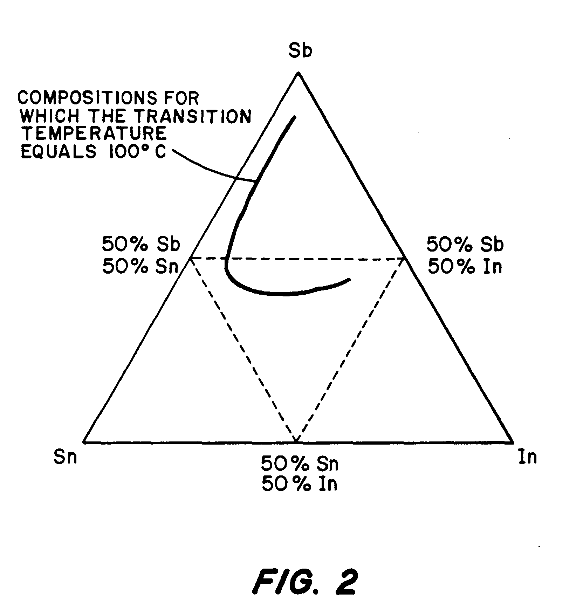

FIG. 2 shows a line of constant transition temperature of 100°C in a ternary composition diagram of Sb-Sn-In alloys. A constant 100°C temperature was used as an example. Nevertheless, it provided a good compromise. This temperature is low enough to be sensitive, and it is high enough to be stable in a DVD-ROM player environment.

It should be noted that the measured transition temperature is a function of the heating rate. It is also a function of layer thickness. Furthermore, the transition temperature depends on the oxygen content in the vacuum chamber. Indirectly, the transition temperature depends on the duration of pump down before deposition.

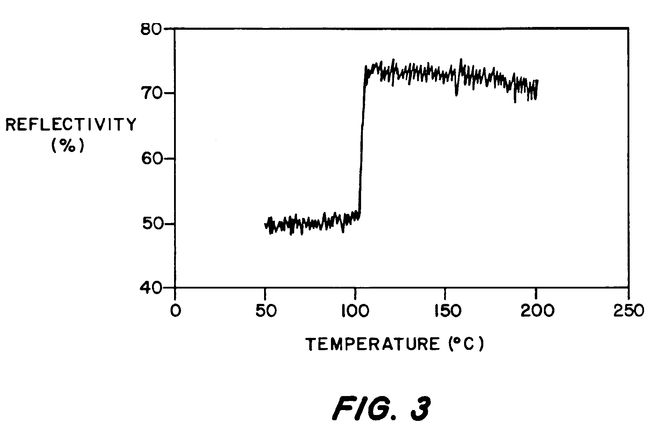

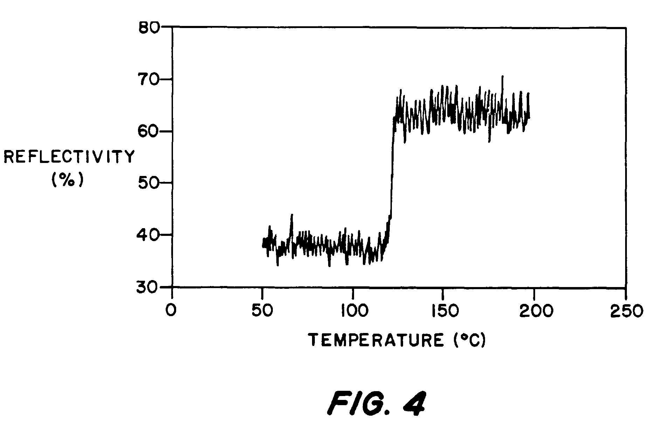

FIG. 3 and FIG. 4 show the specular reflectivity of a markable phase-change layer 14 of Sb₄₉Sn₄₀In₁₁ and Sb₄₄Sn₂₅In₃₁, respectively, as a function of temperature. The markable phase-change layers 14 were heated at a rate of 0.1°C per second. The amorphous to crystalline transition causes a rapid increase in reflectivity at a well-defined temperature. This temperature is referred here as the transition temperature of the markable phase-change layer 14.

FIG. 3, FIG. 4 and Table I also show the magnitude of reflectivity change. A large change is preferred.

### Example 2

A Sb₄₉Sn₄₀In₁₁ markable phase-change layer 14 of 80 nm thickness was deposited onto a transparent layer 12. Then, it was further coated with a UV-cured polymeric protective layer 18. This structure was examined using an optical disk tester with a 635 nm wavelength laser, 0.60 NA and 3.5 m/s linear disk velocity. The laser power was varied from 0.6 to 1.0 mW, which is typical for many CD and DVD readers. The reflectivity was monitored using a 0.5 mW CW laser.

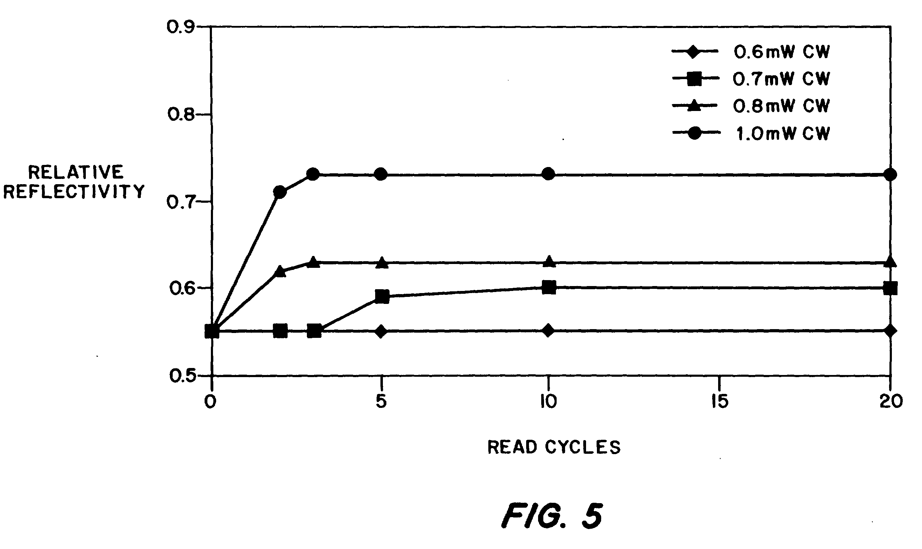

As shown in FIG. 5, a considerable increase in reflectivity is observed with only a single cycle of exposure, when the laser power is greater than 0.8 mW. FIG. 5 shows that the material of this invention is very sensitive. In addition, reducing the linear velocity of the disk can further decrease the marking power.

### PARTS LIST

- 10: optical recordable device
- 12: transparent layer
- 13: data marks
- 14: markable phase-change layer
- 16: reflective layer
- 18: protective layer
- 20: laser read beam

## Claims

1. An optical recordable device comprising:
(a) a transparent layer for recorded data marks;
(b) a markable phase-change layer disposed in relationship with the transparent layer and which is adapted to change phase and reflectivity in response to heating and being disposed over a portion of the transparent layer, wherein the markable phase-change layer has compositions within a polygon in a ternary composition diagram of antimony, tin, and indium; wherein the composition diagram is 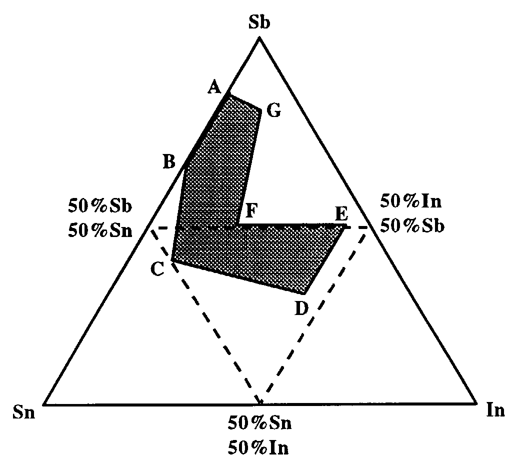 ; and
the polygon has the following vertices and corresponding coordinates in atomic percent
| | Coordinates | | |
|---|---|---|---|
| Vertices | Sb | Sn | In |
| A | 85 | 15 | 0 |
| B | 65 | 35 | 0 |
| C | 40 | 50 | 10 |
| D | 30 | 25 | 45 |
| E | 50 | 5 | 45 |
| F | 50 | 30 | 20 |
| G | 80 | 10 | 10 |
(c) a reflective layer provided over the transparent layer; and
(d) a protective layer formed over the reflective layer.

2. The optical recordable device of claim 1 wherein the markable phase-change layer is Sb₄₉Sn₄₀In₁₁.

3. The optical recordable device of claim 1 wherein the markable phase-change layer is Sb₄₄Sn₂₅In₃₁.

4. The optical recordable device of claim 1 wherein the transparent layer includes data marks which are embossed or recorded by application of laser light.

5. The optical recordable device of claim 1 wherein the heating applied to the markable phase-change layer is by laser light.

6. An optical recordable device comprising:
(a) a transparent layer for recorded data marks;
(b) a markable phase-change layer disposed in relationship with the transparent layer and which is adapted to change phase and reflectivity in response to heating and being disposed over a portion of the transparent layer, wherein the markable phase-change layer has compositions within a polygon in a ternary composition diagram of antimony, tin, and indium; wherein the composition diagram is 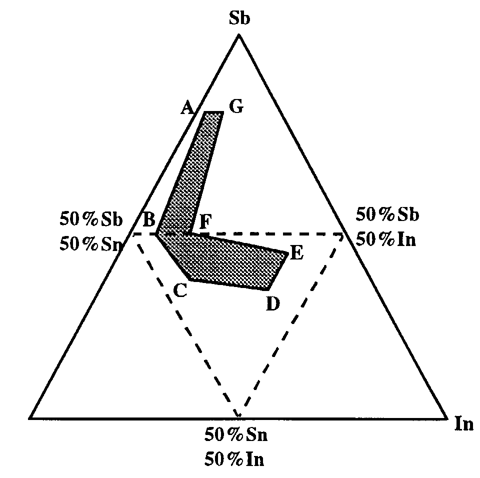 ; and
the polygon has the following vertices and corresponding coordinates in atomic percent:
| | Coordinates | | |
|---|---|---|---|
| Vertices | Sb | Sn | In |
| A | 80 | 18 | 2 |
| B | 50 | 44 | 6 |
| C | 38 | 42 | 20 |
| D | 36 | 24 | 40 |
| E | 46 | 14 | 40 |
| F | 50 | 36 | 14 |
| G | 80 | 14 | 6 |
(c) a reflective layer provided over the transparent layer; and
(d) a protective layer formed over the reflective layer.

7. The optical recordable device of claim 6 wherein the markable phase-change layer is Sb₄₉Sn₄₀In₁₁.

8. The optical recordable device of claim 6 wherein the markable phase-change layer is Sb₄₄Sn₂₅In₃₁.

9. The optical recordable device of claim 6 wherein the transparent layer includes data marks which are embossed or recorded by application of laser light.

10. The optical recordable device of claim 6 wherein the heating applied to the markable phase-change layer is by laser light.
